# EUROPEAN PATENT APPLICATION

(11) **EP 2 701 433 A1**
(43) Date of publication of application: **26.02.2014**
(21) Application number: 12774471.2
(22) Date of filing: 29.03.2012
(51) Int. Cl.: H04W 48/16, H04W 92/18

(54) **COMMUNICATION TERMINAL, CONTROL METHOD FOR COMMUNICATION TERMINAL, AND PROGRAM**

(30) Priority: 19.04.2011 JP 2011093026
(71) Applicant: NEC CASIO Mobile Communications, Ltd., Kawasaki-shi, Kanagawa 211-8666 (JP)
(72) Inventor: RYUTEI, Toru, Kawasaki-shi Kanagawa 211-8666 (JP)
(74) Representative: Vossius & Partner
(86) International application number: PCT/JP2012/058309
(87) International publication number: WO 2012/144303

(57) **Abstract**

A communication terminal includes a memory that stores cell information pertaining to cells managed by a wireless base station, an input unit that receives an operation input, a first communication unit that connects to the wireless base station which manages cells represented by the cell information stored in the memory when a connection request for connection to the wireless base station is input to the input unit, a second communication unit that connects to a terminal in the vicinity as another communication terminal, and a controller which is triggered by a prescribed event to acquire cell information stored in the terminal in the vicinity through the second communication unit and update the cell information stored in the memory with the acquired cell information.

## Description

### BACKGROUND OF INVENTION

### TECHNICAL FIELD

The present invention relates to a communication terminal that can connect to a wireless base station, a method of controlling a communication terminal, and a program.

### Background art:

When a communication terminal, such as a cell phone or a smart phone, for connection to a wireless base station receives a connection request for connection to a wireless base station while the communication terminal is in a waiting mode and not connected to any wireless base station, the communication terminal connects to a wireless base station located in its vicinity.

Patent document 1 (JP2009-038539A) discloses a communication terminal which stores cell information pertaining to cells that are managed by wireless base stations to which the communication terminal has previously connected. The communication terminal stores cell information pertaining to cells, such as frequencies assigned to the cells which are used for communications. The communication terminal which stores the cell information measures the reception level of a signal at a frequency represented by the cell information, and judges whether or not the communication terminal can be connected to a wireless base station that manages the cell represented by the cell information based on the measured reception level.

### RELATED ART LITERATURE

### Patent documents:

Patent document 1: JP2009-038539A

### DISCLOSURE OF INVENTION

The cell information stored in the communication terminal represents cell information pertaining to cells to which the communication terminal has previously connected. When the communication terminal is in an initial state, for example, the communication terminal stores no cell information. Even if the communication terminal stores cell information pertaining to cells to which the communication terminal has connected, when the communication terminal moves a large distance away from a cell connected thereto at the time when the communication terminal is switched off, the communication terminal is unable to measure the reception level of a signal at the frequency represented by the cell information of the cell.

When the communication terminal stores no cell information or when the communication terminal is unable to measure the reception level of a signal represented by the cell information, the communication terminal measures the reception levels of signals at all frequencies at which the communication terminal can communicate, and determines a wireless base station to which the communication terminal is to connect based on the measured reception levels. However, measuring the reception levels of signals at all frequencies at which the communication terminal can communicate tends to increase the time required for the communication terminal to connect to a wireless base station. In order to prevent the time required for the communication terminal to connect to a wireless base station from increasing, it is necessary for the communication terminal to appropriately store the cell information pertaining to cells managed by a wireless base station in the vicinity of the communication terminal.

It is an object of the present invention to provide a communication terminal, a method of controlling a communication terminal, and a program which make it possible to increase the possibility that the cell information pertaining to cells managed by a wireless base station in the vicinity of the communication terminal will appropriately be stored by the communication terminal.

### SUMMARY OF INVENTION

To achieve the above object of the present invention, a communication terminal according to the present invention includes:
a memory that stores cell information pertaining to cells managed by a wireless base station,
an input unit that receives an operation input,
a first communication unit that connects to the wireless base station which manages cells represented by the cell information stored in the memory when a connection request for connection to the wireless base station is input to the input unit,
a second communication unit that connects to a terminal in the vicinity as another communication terminal, and
a controller which is triggered by a prescribed event to acquire cell information stored in the terminal in the vicinity through the second communication unit and to update the cell information stored in the memory with the acquired cell information.

To achieve the above object of the present invention, a method of controlling a communication terminal according to the present invention includes:
storing cell information pertaining to cells managed by a wireless base station,
connecting to the wireless base station which manages cells represented by the stored cell information when a connection request for connection to the wireless base station is input, and in response to a trigger based on a prescribed event, acquiring cell information stored in a terminal in the vicinity as another communication terminal and updating the stored cell information with the acquired cell information.

To achieve the above object of the present invention, a program according to the present invention enables a communication terminal to perform:
a process of storing cell information pertaining to cells managed by a wireless base station,
a process of connecting to the wireless base station which manages cells represented by the stored cell information when a connection request for connection to the wireless base station is input, and
a process of, in response to a trigger based on a prescribed event, acquiring cell information stored in a terminal in the vicinity as another communication terminal and updating the stored cell information with the acquired cell information.

According to the present invention, it is highly possible for the cell information pertaining to cells managed by a wireless base station in the vicinity of a communication terminal to be appropriately stored in the communication terminal.

### BRIEEF DESCRIPTION OF DRAWINGS[0012]

Fig. 1 is a diagram showing an overview of a wireless communication system incorporating a communication terminal according to an exemplary embodiment of the present invention;
Fig. 2 is a block diagram showing the configuration of the communication terminal according to the exemplary embodiment of the present invention;
Fig. 3 is a diagram showing an overview of operation of the communication terminal shown in Fig. 2;
Fig. 4 is a diagram showing an example of the structure of a management cell table stored in a memory shown in Fig. 2;
Fig. 5 is a flowchart of an operation for receiving cell information of the communication terminal shown in Fig. 2; and
Fig. 6 is a flowchart of an operation for sending cell information of the communication terminal shown in Fig. 2.

### EXEMPLARY EMBODIMENT

Exemplary embodiments will be described with reference to the drawings.

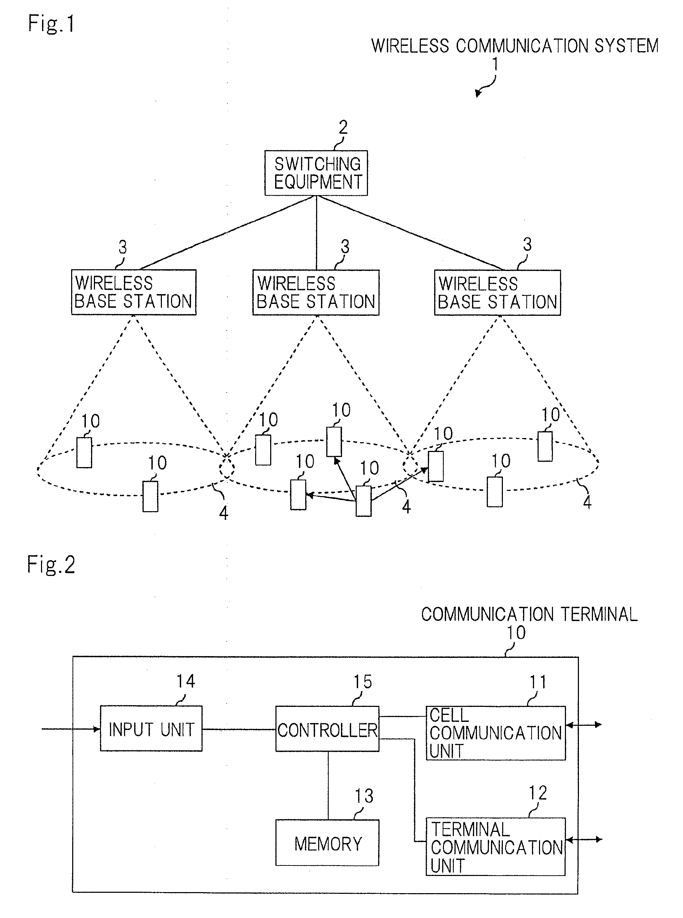

Fig. 1 is a diagram showing an overview of a wireless communication system incorporating a communication terminal according to an exemplary embodiment of the present invention.

As shown in Fig. 1, wireless communication system 1 has switching equipment 2, a plurality of wireless base stations 3, and a plurality of communication terminals 10.

Switching equipment 2 is connected to each of wireless base stations 3.

Each of wireless base stations 3 communicates with communication terminals 10 that are present in cells 4 that are managed by wireless base station 3 itself.

Each of communication terminals 10 connects to wireless base station 3 located in its vicinity and communicates with that wireless base station 3. Each of communication terminals 10 communicates with another communication terminal 10 (hereinafter referred to as "terminal in the vicinity") that is present in a communication zone wherein it can communicate.

The configuration of communication terminal 10 will be described below. The configurations and operation of switching equipment 2 and wireless base stations 3 are well known to those skilled in the art, and will not be described below as they have no direct bearing on the present invention.

Fig. 2 is a block diagram showing the configuration of communication terminal 10 according to the exemplary embodiment of the present invention.

As shown in Fig. 2, communication terminal 10 has cell communication unit 11, terminal communication unit 12, memory 13, input unit 14, and controller 15. Cell communication unit 11 is an example of a first communication unit, and terminal communication unit 12 is an example of a second communication unit.

Cell communication unit 11 connects to a wireless base station in the vicinity of communication terminal 10, not shown in Fig. 2, and communicates with the wireless base station.

Terminal communication unit 12 communicates with a terminal in the vicinity, not shown in Fig. 2, via a wireless LAN (Local Area Network) or a near field communication (NFC) link such as a Bluetooth (registered trademark) link.

Memory 13 stores cell information pertaining to cells managed by wireless base station 3.

Input unit 14 receives an operation input.

When a connection request for connection to a wireless base station is input to input unit 14, controller 15 controls cell communication unit 11 to connect to a wireless base station that manages cells represented by the cell information stored in memory 13. Triggered by a prescribed event, controller 15 controls terminal communication unit 12 to send a transmission request to a terminal in the vicinity for sending the cell information stored by the terminal in the vicinity. Controller 15 acquires, via terminal communication unit 12, the cell information sent from the terminal in the vicinity in response to the transmission request, and updates the cell information stored in memory 13 with the acquired cell information. When terminal communication unit 12 receives a transmission request from a terminal in the vicinity, controller 15 controls terminal communication unit 12 to send the cell information stored in memory 13.

Operation of communication terminal 10 according to the present exemplary embodiment will be described below.

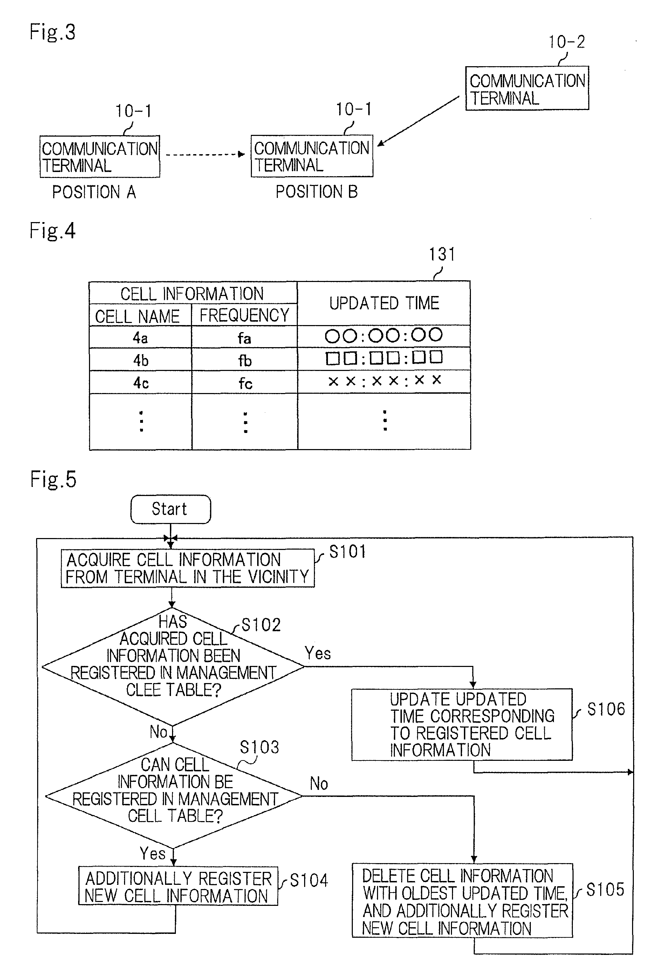

Fig. 3 is a diagram showing an overview of an operation of communication terminal 10 according to the present exemplary embodiment operates.

It is assumed hereinbelow that communication terminal 10-1 has moved from position A to position B, as shown in Fig. 3. It is also assumed hereinbelow that a management cell table which has registered the cell information pertaining to cells managed by a wireless base station in the vicinity of position A, to which communication terminal 10-1 has connected, is stored in memory 13 of communication terminal 10-1.

Fig. 4 is a diagram showing an example of the structure of a management cell table.

As shown in Fig. 4, management cell table 131 registers, as cell information, cell names (4a, 4b, 4c) and frequencies (fa, fb, fc) assigned to the respective cells, and also registers updated times at which the cell information has been updated, in association with the cell information.

Communication terminal 10-1 periodically sends a transmission request to a terminal in the vicinity. It is assumed that communication terminal 10-1 has sent a transmission request at position B.

As shown in Fig. 3, communication terminal 10-2 is present as a terminal in the vicinity at position B.

When communication terminal 10-2 receives the transmission request sent from communication terminal 10-1, communication terminal 10-2 sends the cell information stored therein to communication terminal 10-1. It is assumed that communication terminal 10-2 stores the cell information pertaining to cells 4a, 4b, 4d.

When communication terminal 10-1 acquires the cell information sent from communication terminal 10-2, communication terminal 10-1 updates the stored cell information with the acquired cell information. Specifically, communication terminal 10-1 additionally registers the cell information pertaining to cell 4d that has not been registered in management cell table 131, in management cell table 131. Communication terminal 10-1 also overwrites the cell information pertaining to cells 4a, 4b that has been registered in management cell table 131, and updates the updated times corresponding to the cell information pertaining to cells 4a, 4b into a present time.

Since the cell information stored in communication terminal 10-1 is updated with the cell information acquired from the terminal in the vicinity (communication terminal 10-2), the cell information pertaining to cells managed by the wireless base information in the vicinity of the destination (position B) can be reflected in the cell information stored in communication terminal 10-1.

Operation for receiving cell information of communication terminal 10 according to the present exemplary embodiment will be described below with reference to a flowchart shown in Fig. 5.

Controller 15 periodically acquires the cell information stored in a vicinity terminal through terminal communication unit 12 (step S101), and judges whether or not the acquired cell information has been registered in the management cell table (step S102).

If the acquired cell information has not been registered in the management cell table (step S102: No), then controller 15 judges whether or not the cell information can be registered in the management cell table (step S 103). Cell information that has not been registered in the management cell table will hereinafter be referred to as "new cell information".

There is a limitation on the number of items of cell information that can be registered in the management cell table. When controller 15 is to register new cell information in the management cell table, controller 15 judges whether or not the new cell information can be registered in the management cell table based on whether or not the number of items of cell information to be registered exceeds the limitation.

If the new cell information can be registered in the management cell table (step S103: Yes), then controller 15 additionally registers the new cell information in the management cell table, and registers the present time as the updated time for the registered new cell information (step S104).

If the new cell information can not be registered in the management cell table (step S103: No), then controller 15 deletes the cell information having the oldest updated time from the cell information registered in the management cell table, then additionally registers the new cell information in the management cell table, and registers the present time as the updated time for the registered new cell information (step S105).

If the acquired cell information has been registered in the management cell table (step S102: No), then controller 15 updates the updated time corresponding to the cell information into a present time (step S106).

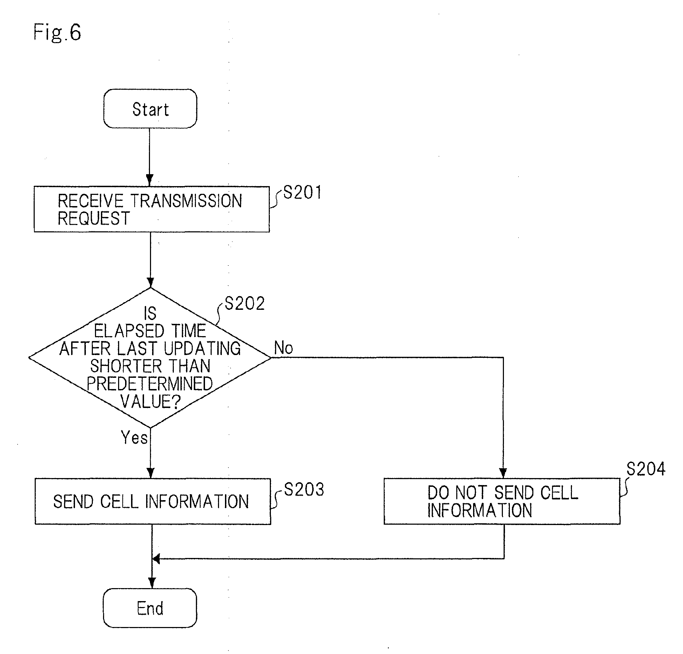

Operation for sending cell information of communication terminal 10 according to the present exemplary embodiment will be described below with reference to a flowchart shown in Fig. 6.

When terminal communication unit 12 receives a transmission request (step S201), controller 15 determines the period of time that has elapsed after the latest updating of the cell information from the latest updated time at which the cell information was updated and the present time, and judges whether or not the elapsed period of time is shorter than a predetermined value (step S202).

If the elapsed period of time is shorter than the predetermined value (step S202: Yes), then controller 15 instructs terminal communication unit 12 to send the cell information stored in memory 13 to the terminal in the vicinity (step S203).

If the elapsed period of time is equal to or longer than the predetermined value (step S202: No), then communication terminal 10 may possibly be turned off or may possibly be out of the communication range, so that the cell information in the vicinity of communication terminal 10 may not be reflected in the cell information stored in memory 13. If the cell information that does reflect the cell information in the vicinity of communication terminal 10 were sent to the terminal in the vicinity, then it would possibly have a negative effect when the terminal in the vicinity connects to the wireless base station. Therefore, controller 15 does not send the cell information (step S204).

According to the present exemplary embodiment, therefore, the cell information stored in the terminal is updated with the cell information acquired from a terminal in the vicinity.

Consequently, it is highly possible for the cell information pertaining to cells managed by a wireless base station in the vicinity of communication terminal 10 to be appropriately stored in communication terminal 10.

According to the present exemplary embodiment, furthermore, when communication terminal 10 receives a transmission request from a terminal in the vicinity, communication terminal 10 does not send the cell information if the period of time that has elapsed after the latest updating of the cell information is equal to or longer than a predetermined value.

Therefore, the cell information that has not been updated for a long period of time and that may possibly not reflect the cell information pertaining to cells managed by a wireless base station in the vicinity of communication terminal 10, is prevented from being sent to the terminal in the vicinity.

In the present exemplary embodiment, communication terminal 10 has been described as periodically sending a transmission request. However, triggered by a connection request input to a wireless base station, communication terminal 10 may send a transmission request before it connects to the wireless base station that manages cells represented by the stored cell information. By updating the cell information with the cell information acquired from a terminal in the vicinity before communication terminal 10 connects to the wireless base station that manages cells represented by the stored cell information, communication terminal 10 can connect to the wireless base station using the latest cell information.

The method carried out by the communication terminal according to the present invention may be applied to a program to be executed by a computer. Such a program may be stored in a storage medium or may be made available to an external entity through a network.

The invention of the present application has been described with reference to the exemplary embodiments. The invention of the present application, however, is not limited to the above-described exemplary embodiments. Various changes and modifications that those skilled in the art can understand can be made in the configuration and details of the invention of the present application within the scope of the invention of the present application.

This application is based upon and claims the benefit of priority from Japanese Patent Application No. 2011-093026 filed on April 19, 2011, the entire disclosure of which is incorporated herein by reference.

## Claims

1. A communication terminal comprising:
a memory that stores cell information pertaining to cells managed by a wireless base station;
an input unit that receives an operation input;
a first communication unit that connects to the wireless base station which manages cells represented by the cell information stored in said memory when a connection request for connection to the wireless base station is input to said input unit;
a second communication unit that connects to a terminal in the vicinity as another communication terminal; and
a controller which is triggered by a prescribed event to acquire cell information stored in said terminal in the vicinity through said second communication unit and update the cell information stored in said memory with the acquired cell information.

2. The communication terminal according to claim 1, wherein
said memory stores an updated time at which said cell information has been updated, in association with said cell information; and
in response to a transmission request that is sent from said terminal in the vicinity for sending the cell information stored in said memory and that is received by said second communication unit, said controller instructs said second communication unit to send the cell information stored in said memory to said terminal in the vicinity if a period of time that has elapsed after the latest updating of the cell information is shorter than a predetermined value, and instructs said second communication unit not to send the cell information stored in said memory to said terminal in the vicinity if said period of time that has elapsed after the latest updating of the cell information is equal to or longer than said predetermined value.

3. The communication terminal according to claim 1 or 2, wherein said controller controls said second communication unit to periodically acquire the cell information stored in said terminal in the vicinity.

4. The communication terminal according to claim 1 or 2, wherein said controller is triggered by said connection request input to said input unit to acquire the cell information stored in said terminal in the vicinity through said second communication unit, updates said cell information stored in said memory with the acquired cell information, and thereafter controls said first communication unit to connect to the wireless base station which manages cells represented by the cell information stored in said memory.

5. A method of controlling a communication terminal, comprising:
storing cell information pertaining to cells managed by a wireless base station;
connecting to the wireless base station which manages cells represented by the stored cell information when a connection request for connection to the wireless base station is input; and
in response to a trigger based on a prescribed event, acquiring cell information stored in a terminal in the vicinity as another communication terminal and updating the stored cell information with the acquired cell information.

6. The method of controlling a communication terminal according to claim 5, further comprising:
storing an updated time at which said cell information has been updated, in association with said cell information; and
in response to receiving a transmission request sent from said terminal in the vicinity to send the cell information stored in said memory, sending the stored cell information to said terminal in the vicinity if a period of time that has elapsed after the latest updating of the cell information is shorter than a predetermined value, and failing to send the stored cell information to said terminal in the vicinity if said period of time that has elapsed after the latest updating of the cell information is equal to or longer than said predetermined value.

7. The method of controlling a communication terminal according to claim 5 or 6, further comprising:
periodically acquiring the cell information stored in said terminal in the vicinity.

8. The method of controlling a communication terminal according to claim 5 or 6, further comprising:
in response to a trigger based on the input connection request, acquiring said cell information stored in said terminal in the vicinity, updating the stored cell information with the acquired cell information, and thereafter connecting to the wireless base station which manages cells represented by the stored cell information.

9. A program for enabling a communication terminal to perform:
a process of storing cell information pertaining to cells managed by a wireless base station;
a process of connecting to the wireless base station which manages cells represented by the stored cell information when a connection request for connection to the wireless base station is input; and
a process of, in response to a trigger based on a prescribed event, acquiring cell information stored in a terminal in the vicinity as another communication terminal and updating the stored cell information with the acquired cell information.
